# FASCICULE DE BREVET EUROPEEN

(11) **EP 1 845 069 B1**
(45) Date de publication et mention de la délivrance du brevet: **18.11.2015**
(21) Numéro de dépôt: 07300926.8
(22) Date de dépôt: 05.04.2007
(51) Int. Cl.: C03C 17/00, C03C 17/34

(54) **Procédé de réalisation d'un élément de décor sur les deux faces d'un panneau de verre ou de vitrocéramique et panneau obtenu par ce procédé**
Verfahren zur Erstellung eines dekorativen Elements auf beiden Seiten einer Glasscheibe oder einer Glaskeramikscheibe und mit diesem Verfahren erhaltene Scheibe
Method of manufacturing a decoration element on both sides of a glass or ceramic panel and panel obtained by this method

(30) Priorité: 13.04.2006 FR 0651339
(43) Date de publication de la demande: 17.10.2007
(73) Titulaire: Schott VTF (Societe Par Actions Simplifiee), 57870 Troisfontaines (FR)
(72) Inventeur: Kirschwing, Didier, 57445 Reding (FR); Chevrier, Laurent, 57870 Hartzwiller (FR)
(74) Mandataire: Nuss, Laurent

(56) Documents cités:
- EP-A- 0 807 611
- EP-A2- 1 293 726
- WO-A2-03/084891
- US-A1- 2003 066 825

## Description

La présente invention concerne l'industrie du verre et plus particulièrement le domaine des panneaux verriers réalisés en verre ou en vitrocéramique, décorés et pouvant former des bandeaux de commande pour des appareils électroménagers ou des panneaux de décoration dans le domaine de l'ameublement. Elle se rapporte plus particulièrement à un procédé de réalisation d'un tel panneau et à un panneau réalisé par la mise en oeuvre de ce procédé.

Les panneaux en verre ou en vitrocéramique décorés connus sont généralement utilisés en tant que bandeaux de commande pour les cuisinières, les fours, les lave-vaisselle et les appareils micro-ondes.

Ces panneaux à base de verre ou de vitrocéramique sont des pièces d'esthétique décorées par application d'une ou de plusieurs couches de décors en émail réalisées sur l'une des faces du panneau en verre ou en vitrocéramique.

Si une deuxième face dudit panneau en verre ou en vitrocéramique doit être décorée, par exemple avec une teinte émaillée, il se pose un problème pour sa réalisation.

En effet, il n'est pas possible d'utiliser un four à plat pour le traitement du décor de la deuxième face du panneau car la première face émaillée, si elle était disposée sur les rouleaux de transport dudit four, laisserait de l'émail sur lesdits rouleaux. Pour éviter ce problème, il est actuellement proposé d'appliquer une couche de peinture, en général à base d'époxy, sur la deuxième face du panneau, au lieu d'utiliser de l'émail. Mais cette solution n'est pas satisfaisante car la couche ainsi réalisée est dite tendre, à l'opposé d'une couche d'émail dite dure, et sa résistance mécanique est faible par rapport à celle de l'émail, ce qui fait qu'elle ne résistera pas aux abrasions de toutes nature. Ainsi, ce mode de réalisation n'est pas satisfaisant car couche de peinture s'altère facilement.

Par ailleurs, on connaît par WO 03/084891 une plaque vitrocéramique pourvue, d'un côté, d'un revêtement, par exemple en résine silicone et, de l'autre côté, d'une couche d'émail. La couche de résine silicone est soumise à un traitement thermique, dit de séchage, entre 80 °C et 450 °C

En outre, EP 0 807 611 décrit un panneau de verre, qui est revêtu d'un côté d'un mélange d'oxyde métallique, à savoir d'un oxyde mixte d'étain et d'indium et, de l'autre côté, de deux couches d'émail. Ce document ne décrit pas la réalisation de décor sur une partie seulement d'une surface, par sérigraphie.

La présente invention a pour but de pallier ces inconvénients et de fournir un procédé permettant à la fois de déposer un décor résistant et stable sur chacune des deux faces d'un panneau de verre ou de vitrocéramique et d'utiliser un four à plat pour la réalisation du décor pour la seconde face du panneau, sans détériorer le décor de la première face dudit panneau ni les rouleaux de transport du four à plat utilisé.

A cet effet, l'invention a pour objet un procédé de réalisation d'un élément de décor sur les deux faces d'un panneau de verre ou de vitrocéramique, caractérisé en ce qu'il consiste :
a) à appliquer un décor sur une première face dudit panneau de verre ou de vitrocéramique en réalisant les étapes consistant :
   - à déposer, sur ladite première face, aux endroits souhaités, au moins une couche décorative constituée par un mélange d'oxydes métalliques intégrés dans une pâte pouvant être traitée par calcination, puis
   - à calciner ladite couche décorative dans un four ; et
b) à appliquer un décor sur la seconde face dudit panneau de verre ou de vitrocéramique en réalisant les étapes consistant :
   - à déposer, sur la deuxième face dudit panneau de verre ou de vitrocéramique, aux endroits souhaités, une ou plusieurs couches décoratives à base d'émail, puis
   - à vitrifier lesdites couches décoratives déposées sur la seconde face du panneau de verre ou de vitrocéramique par un passage de ce dernier dans un four à plat.

Elle concerne également un panneau de verre ou de vitrocéramique décoré sur ses deux faces et dont la décoration desdites faces est réalisée par la mise en oeuvre de ce procédé.

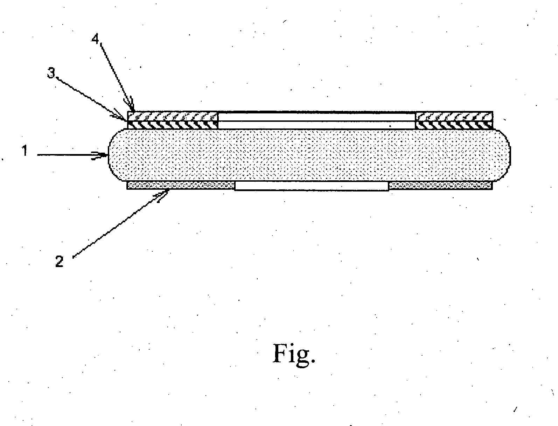

L'invention sera mieux comprise, grâce à la description ci-après, qui se rapporte à trois modes de réalisation préférés, donnés à titre d'exemples non limitatifs, et expliqués avec référence au dessin schématique annexé, dans lequel la figure unique représente une vue en coupe d'un panneau de verre ou de vitrocéramique décoré sur ses deux faces par la mise en oeuvre du procédé selon l'invention.

Ce procédé de réalisation d'un élément de décor sur les deux faces d'un panneau de verre ou de vitrocéramique consiste :
a) à appliquer un décor sur une première face dudit panneau de verre ou de vitrocéramique 1 en réalisant les étapes consistant :
   - à déposer, sur ladite première face, aux endroits souhaités, au moins une couche décorative 2 constituée par un mélange d'oxydes métalliques intégrés dans une pâte pouvant être traitée par calcination, puis
   - à calciner ladite couche décorative 2 dans un four ; et
b) à appliquer un décor sur la seconde face dudit panneau de verre ou de vitrocéramique 1 en réalisant les étapes consistant :
   - à déposer, sur la deuxième face dudit panneau de verre ou de vitrocéramique 1, aux endroits souhaités, une ou plusieurs couches décoratives 3, 4 à base d'émail, puis
   - à vitrifier lesdites couches décoratives 3, 4 déposées sur la seconde face du panneau de verre ou de vitrocéramique 1 par un passage de ce dernier dans un four à plat.

Ainsi, grâce à l'utilisation du mélange d'oxydes métalliques associés à la pâte disparaissant après calcination, on arrive à obtenir, après une telle calcination, un film d'oxydes parfaitement lié à la première face du panneau de verre ou de vitrocéramique 1 à décorer. En outre, ce film est stable et ne craint ni un passage sur des rouleaux de transport d'un four à plat, ni un second traitement sous la forme d'une trempe dans ledit four, de sorte qu'il est donc à présent possible d'appliquer et de traiter de façon classique une ou plusieurs couches décoratives sur la deuxième face dudit panneau de verre ou de vitrocéramique 1.

Selon une caractéristique de l'invention, la calcination de la pâte peut être réalisée par un passage du panneau de verre ou de vitrocéramique 1 dans un four à plat. A cet effet, il est avantageux d'utiliser le four à plat utilisé pour le traitement de la couche décorative déposée sur la deuxième face du panneau de verre ou de céramique 1 à décorer. Ainsi, après un deuxième passage du panneau de verre ou de vitrocéramique dans un four d'émaillage et de trempe, il est obtenu un panneau de verre ou de vitrocéramique 1 pourvu d'un décor résistant sur chacune de ses deux faces.

Bien entendu, il est également possible de réaliser la calcination précitée par tout autre moyen adapté.

De manière avantageuse, le procédé peut consister, pour vitrifier la ou les couches décoratives 3, 4 déposées sur la seconde face du panneau de verre ou de vitrocéramique 1, à déposer ce dernier dans ledit four à plat, de telle sorte que sa première face repose sur les rouleaux de transport dudit four. En effet, comme déjà indiqué, la première face du panneau de verre ou de vitrocéramique 1 déjà décorée est stable et ne laissera pas de traces sur les rouleaux de transport du four à plat et ne sera pas non plus abîmée par ces derniers.

En fonction du résultat final souhaité, le procédé selon l'invention peut consister à appliquer plusieurs décors sur la seconde face dudit panneau de verre ou de vitrocéramique 1.

La figure annexée représente à cet effet un panneau de verre ou de vitrocéramique 1 réalisé par application de deux couches décoratives 3 et 4 sur la deuxième face dudit panneau de verre ou de vitrocéramique 1. Pour ce faire, après avoir décoré la première face, il a donc été procédé, dans un premier temps, au dépôt d'une première couche décorative 3 à base d'émail sur la deuxième face dudit panneau de verre ou de vitrocéramique 1 puis, dans un deuxième temps, au dépôt d'une nouvelle couche décorative 4 à base d'émail sur la deuxième face et/ou la première couche décorative 3 dudit panneau de verre ou de vitrocéramique et au traitement de ces couches décoratives 3 et 4 par un nouveau passage au four à plat. Lors de ce passage au four, l'émail est trempé et/ou vitrifié. Si le panneau est trempé et est en verre, il en résulte un panneau verrier dit de sécurité.

Ainsi, selon l'invention, le traitement de la ou des couches décoratives 3, 4 déposées sur la seconde face du panneau de verre ou de vitrocéramique 1 peut être suivi d'une trempe. Une telle trempe permet de conférer au verre les propriétés d'un verre trempé de sécurité.

De manière caractéristique, la pâte utilisée dans le cadre du procédé peut être une solution à base de titane, dans laquelle le titane est présent sous la forme d'un complexe. Cette pâte peut être du type de celle décrite dans la demande de brevet allemand n° 103 59 884.

Selon un premier mode de réalisation de l'invention, le procédé peut consister à appliquer les couches décoratives 2, 3 et/ou 4 sur le panneau de verre ou de vitrocéramique 1 par sérigraphie.

Selon un deuxième mode de réalisation, le procédé peut consister à appliquer les couches décoratives 2, 3, et/ou 4 sur le panneau de verre ou de vitrocéramique 1 par un rouleau ou un pinceau.

Enfin, selon un troisième mode de réalisation, le procédé peut consister à appliquer les couches décoratives 2, 3 et/ou 4 sur le panneau de verre ou de vitrocéramique 1 par projection.

Bien entendu, chaque couche décorative 2, 3, 4 peut être appliquée selon l'un quelconque des trois modes précités, indépendamment des modes utilisés pour l'application des deux autres couches décoratives.

L'invention concerne également un panneau de verre ou de vitrocéramique 1 décoré sur ses deux faces, caractérisé en ce que la décoration desdites faces est réalisée par la mise en oeuvre du procédé décrit ci-dessus. Un tel panneau de verre ou de vitrocéramique est représenté sur la figure annexée.

Grâce à l'invention, il est donc possible de munir un panneau de verre ou de vitrocéramique 1 de couches décoratives 2, 3, 4 dites dures sur ses deux faces tout en utilisant, pour la réalisation desdites couches décoratives 2, 3, 4, un four à plat. Dans le cas d'un panneau de verre, si ce dernier est trempé, il en résulte un verre de sécurité.

L'invention est plus particulièrement applicable dans le domaine des équipements électroménagers, en particulier de la réalisation d'éléments verriers tels que des bandeaux de commande, des éléments de portes, des plans de cuisson ou analogues, ainsi que dans l'ameublement.

Bien entendu, l'invention n'est pas limitée aux modes de réalisation décrits. Des modifications restent possibles, notamment du point de vue de la constitution des divers éléments ou par substitution d'équivalents techniques, sans sortir pour autant du domaine de protection de l'invention.

## Revendications

1. Procédé de réalisation d'un élément de décor sur les deux faces d'un panneau de verre ou de vitrocéramique, **caractérisé en ce qu'**il consiste, successivement et dans l'ordre :
a) à appliquer un décor sur une première face dudit panneau de verre ou de vitrocéramique (1) en réalisant les étapes successives consistant :
- à déposer, sur ladite première face, aux endroits souhaités, au moins une couche décorative (2) constituée par un mélange d'oxydes métalliques intégrés dans une pâte pouvant être traitée par calcination, puis
- à calciner ladite couche décorative (2) dans un four ; puis
b) à appliquer un décor sur la seconde face dudit panneau de verre ou de vitrocéramique (1) en réalisant les étapes successives consistant :
- à déposer, sur la deuxième face dudit panneau de verre ou de vitrocéramique (1), aux endroits souhaités, une ou plusieurs couches décoratives (3, 4) à base d'émail, puis
- à vitrifier lesdites couches décoratives (3, 4) déposées sur la seconde face du panneau de verre ou de vitrocéramique (1) par un passage de ce dernier dans un four à plat.

2. Procédé, selon la revendication 1, **caractérisé en ce que** la calcination de la pâte est réalisée par un passage du panneau de verre ou de vitrocéramique (1) dans un four à plat.

3. Procédé, selon l'une quelconque des revendications 1 et 2, **caractérisé en ce que** la pâte est une solution d'oxydes métalliques à base de de titane, dans laquelle le titane est présent sous la forme d'un complexe.

4. Procédé, selon l'une quelconque des revendications 1 à 3, **caractérisé en ce qu'**il consiste à appliquer les couches décoratives (2, 3 et/ou 4) sur le panneau de verre ou de vitrocéramique (1) par sérigraphie.

5. Procédé, selon l'une quelconque des revendications 1 à 4, **caractérisé en ce qu'**il consiste à appliquer les couches décoratives (2, 3 et/ou 4) sur le panneau de verre ou de vitrocéramique (1) par un rouleau ou un pinceau.

6. Procédé, selon l'une quelconque des revendications 1 à 5, **caractérisé en ce qu'**il consiste à appliquer les couches décoratives (2, 3 et/ou 4) sur le panneau de verre ou de vitrocéramique (1) par projection.

7. Procédé, selon l'une quelconque des revendications 1 et 2, **caractérisé en ce qu'**il consiste, pour vitrifier la ou les couches décoratives (3, 4) déposées sur la seconde face du panneau de verre ou de vitrocéramique (1), à déposer ce dernier dans ledit four à plat, de telle sorte que sa première face repose sur les rouleaux de transport dudit four.

8. Procédé, selon l'une quelconque des revendications 1 à 3, **caractérisé en ce que** le traitement de la ou des couches décoratives (3, 4) déposées sur la seconde face du panneau de verre ou de vitrocéramique (1) est suivi d'une trempe.

9. Panneau de verre ou de vitrocéramique décoré sur ses deux faces, la décoration desdites faces étant réalisée par la mise en oeuvre du procédé selon l'une quelconque des revendications 1 à 8, **caractérisé en ce qu'**une première face dudit panneau de verre ou de vitrocéramique (1) présente au moins une couche décorative (2) stable et constituée par un mélange d'oxydes métalliques traités par calcination dans un four à plat.

## Patentansprüche

1. Verfahren zur Erstellung eines dekorativen Elements auf beiden Seiten einer Glas- oder Glaskeramikscheibe, **dadurch gekennzeichnet, dass** es nacheinander und in der Reihenfolge umfasst:
a) Aufbringen eines Dekors auf einer ersten Seite der genannten Glas- oder Glaskeramikscheibe (1) durch die folgenden Schritte umfassend:
- Ablagern, auf der genannten ersten Seite, an den gewünschten Stellen, wenigstens einer dekorativen Schicht (2), die aus einer Mischung von Metalloxiden, die in einer durch Kalzinierung behandelbaren Paste integriert sind, gebildet ist, dann
- Kalzinieren der genannten dekorativen Schicht (2) in einem Ofen; dann
b) Aufbringen eines Dekors auf der zweiten Seite der genannten Glas- oder Glaskeramikscheibe (1) durch die folgenden Schritte umfassend:
- Ablagern, auf der zweiten Seite der genannten Glas- oder Glaskeramikscheibe (1), an den gewünschten Stellen, einer oder mehrerer dekorativer Schichten (3, 4) auf Basis von Email, dann
- Verglasen der genannten dekorativen Schichten (3, 4), die auf der zweiten Seite der Glas- oder Glaskeramikscheibe (1) abgelagert sind, mittels eines Durchgangs der letzteren in einem Flach-Ofen.

2. Verfahren nach Anspruch 1, **dadurch gekennzeichnet, dass** die Kalzinierung der Paste mittels eines Durchgangs der Glas- oder Glaskeramikscheibe (1) in einem Flach-Ofen realisiert wird.

3. Verfahren nach einem der Ansprüche 1 und 2, **dadurch gekennzeichnet, dass** die Paste eine Lösung von Metalloxiden auf der Basis von Titan ist, in der das Titan in Form eines Komplexes vorliegt.

4. Verfahren nach einem der Ansprüche 1 bis 3, **dadurch gekennzeichnet, dass** es ein Aufbringen der dekorativen Schichten (2, 3 und/oder 4) auf der Glas- oder Glaskeramikscheibe (1) durch Siebdruck umfasst.

5. Verfahren nach einem der Ansprüche 1 bis 4, **dadurch gekennzeichnet, dass** es ein Aufbringen der dekorativen Schichten (2, 3 und/oder 4) auf der Glas- oder Glaskeramikscheibe (1) durch eine Walze oder einen Pinsel umfasst.

6. Verfahren nach einem der Ansprüche 1 bis 5, **dadurch gekennzeichnet, dass** es ein Aufbringen der dekorativen Schichten (2, 3 und/oder 4) auf der Glas- oder Glaskeramikscheibe (1) durch Spritzen umfasst.

7. Verfahren nach einem der Ansprüche 1 und 2, **dadurch gekennzeichnet, dass** es für das Verglasen der dekorativen Schicht bzw. dekorativen Schichten (3, 4), die auf der zweiten Seite der Glas- oder Glaskeramikscheibe (1) abgelagert sind, ein Einbringen der letzteren in den genannten Flach-Ofen umfasst, derart, dass ihre erste Seite auf den Transportwalzen des genannten Ofens aufliegt.

8. Verfahren nach einem der Ansprüche 1 bis 3, **dadurch gekennzeichnet, dass** die Behandlung der dekorativen Schicht bzw. dekorativen Schichten (3, 4), die auf der zweiten Seite der Glas- oder Glaskeramikscheibe (1) abgelagert sind, von einem Abschrecken gefolgt wird.

9. Glas- oder Glaskeramikscheibe, die auf ihren beiden Seiten dekoriert ist, wobei die Dekoration der genannten Seiten mittels Durchführung des Verfahrens nach einem der Ansprüche 1 bis 8 realisiert ist, **dadurch gekennzeichnet, dass** eine erste Seite der genannten Glas- oder Glaskeramikscheibe (1) wenigstens eine dekorative Schicht (2) aufweist, die stabil ist und durch eine mittels Kalzinierung in einem Flach-Ofen behandelte Mischung von Metalloxiden gebildet ist.

## Claims

1. Method for producing a decorative element on both sides of a glass or vitroceramic panel, **characterised in that** it consists of the following in order given:
a) the application of a decoration on the first side of said glass or vitroceramic panel (1) by carrying out the following successive steps, comprising:
- placing at least one decorative layer (2) at the required locations on said first face, formed from a mixture of metal oxides integrated into a paste that can be treated by calcination, and then
- the calcination of said decorative layer (2) in a furnace; and then
b) the application of a decoration to the second side of said glass or vitroceramic panel (1) by carrying out the successive steps comprising:
- the placing of one or several enamel-based decorative layers (3, 4) at the desired locations of the second face of said glass or vitroceramic panel (1), and then
- vitrifying said decorative layers (3, 4) deposited on the second side of glass or vitroceramic panel (1) by placing the latter in a horizontal or flat furnace.

2. Method according to Claim 1, **characterised in that** the calcination of the paste is achieved by placing glass or vitroceramic panel (1) in a horizontal or flat furnace.

3. Method according to any one of Claims 1 and 2 **characterised in that** the paste is a solution of titanium-based metal oxides, in which the titanium is in the form of a complex.

4. Method according to any one of Claims 1 to 3, **characterised in that** it consists in applying decorative layers (2, 3 and/or 4) to glass or vitroceramic panel (1) by screen printing.

5. Method according to any one of Claims 1 to 4, **characterised in that** it consists in applying decorative layers (2, 3 and/or 4) to glass or vitroceramic panel (1) using a roller or a paintbrush.

6. Method according to any one of Claims 1 to 5, **characterised in that** it consists in applying decorative layers (2, 3 and/or 4) to glass or vitroceramic panel (1) by projection.

7. Method according to any one of Claims 1 and 2, **characterised in that** it consists, for the vitrification of decorative layer(s) (3, 4) that have been deposited on the second side of glass or vitroceramic panel (1), in placing the latter in said horizontal or flat furnace, in such a way that its first face rests on the transport rollers of said furnace.

8. Method according to any one of Claims 1 to 3, **characterised in that** the treatment of the decorative layer(s) (3, 4) deposited on the second side of glass or vitroceramic panel (1) is followed by tempering.

9. Glass or vitroceramic panel decorated on both sides, with said sides having been decorated using the Method according to any one of Claims 1 to 8, **characterised in that** a first side of said glass or vitroceramic panel (1) has at least one stable decorative layer (2) formed from a mixture of metal oxides treated by calcination in a horizontal or flat furnace.
